# FASCICULE DE BREVET EUROPEEN

(11) **EP 3 194 112 B1**
(45) Date de publication et mention de la délivrance du brevet: **19.05.2021**
(21) Numéro de dépôt: 15778363.0
(22) Date de dépôt: 18.09.2015
(51) Int. Cl.: B23P 15/04, B23K 20/02, F04D 29/32, F04D 29/02, F01D 5/14, F01D 5/28, B21D 53/78

(54) **PROCÉDÉ DE FABRICATION DE BOUCLIER DE BORD D'ATTAQUE**
VERFAHREN ZUR HERSTELLUNG EINER VORDERKANTENABSCHIRMUNG
METHOD OF MANUFACTURING A LEADING EDGE SHIELD

(30) Priorité: 19.09.2014 FR 1458855
(43) Date de publication de la demande: 26.07.2017
(73) Titulaire: SAFRAN AIRCRAFT ENGINES, 75015 Paris (FR)
(72) Inventeur: KLEIN, Gilles Charles Casimir, F-77550 Moissy-cramayel Cedex (FR); FRANCHET, Jean-Michel Patrick Maurice, F-77550 Moissy-cramayel Cedex (FR); MAGNAUDEIX, Dominique Michel Serge, F-77550 Moissy-cramayel Cedex (FR)
(74) Mandataire: Cabinet Beau de Loménie
(86) Numéro de dépôt international: PCT/FR2015/052507
(87) Numéro de publication internationale: WO 2016/042275

(56) Documents cités:
- WO-A1-2013/156711
- FR-A1- 2 319 008
- FR-A1- 2 975 734
- US-A1- 2012 114 494

## Description

### Arrière-plan de l'invention

La présente invention concerne un procédé de fabrication de bouclier de bord d'attaque. De tels boucliers de bord d'attaque sont typiquement destinés à protéger les bords d'attaque d'aubes tournantes contre les impacts. On entend par « aubes », dans ce contexte, tant les aubes de soufflante que les pales d'hélice aérienne. Afin de limiter leur poids, ces aubes sont typiquement en composite à matrice en polymère renforcée par des fibres. Bien que ces matériaux présentent des qualités mécaniques généralement très favorables, en particulier par rapport à leur masse, ils sont particulièrement sensibles aux impacts ponctuels, qui peuvent générer notamment des phénomènes de délaminage au sein du matériau. Des boucliers, typiquement en matériau métallique hautement résistant, comme les alliages de titane, sont donc normalement installés sur les bords d'attaque de telles aubes, afin de les protéger contre ces impacts. Ces boucliers prennent normalement la forme d'une fine ailette intrados et une fine ailette extrados jointes par une section plus épaisse chevauchant le bord d'attaque, l'ensemble épousant la forme de l'aube sur le bord d'attaque et des sections adjacentes de l'intrados et de l'extrados. Les ailettes intrados et extrados s'étendent sur ces sections de, respectivement, l'intrados et l'extrados de l'aube, et servent principalement à assurer le positionnement et la fixation du bouclier sur le bord d'attaque.

Afin d'améliorer les performances aérodynamiques des aubes, leurs bords d'attaque présentent des formes de plus en plus complexes, ce qui complique la fabrication des boucliers devant épouser ces formes. Deux procédés sont actuellement connus de la personne du métier. Dans un premier de ces procédés, le bouclier est fabriqué principalement par forgeage à partir d'une barre d'alliage, avec des étapes successives de cambrage, bourrage et filage, avec une étape finale de vrillage pour rapprocher les ailettes et calibrer la section plus épaisse. L'application de ce premier procédé de l'état de la technique à des matériaux aussi résistants que les alliages de titane typiquement employés pour les boucliers de bord d'attaque présente toutefois des inconvénients importants : une usure importante des outils de forgeage et un nombre important d'étapes de fabrication, ce qui est économiquement négatif, et une grande difficulté pour obtenir des épaisseurs très fines pour les ailettes ou des petits rayons de transition entre les ailettes et la section plus épaisse, ce qui est techniquement inconvénient.

Dans un autre des procédés de l'état de la technique, le bouclier est fabriqué à partir de tôles usinées afin de former des régions plus épaisses avant de conformer le bouclier. Cet usinage préalable présente toutefois l'inconvénient d'un gâchis important de matériau au coût considérable, ainsi que l'usure des outils d'usinage et le temps d'usinage. Pour y remédier, il a été proposé, notamment dans la publication de demande de brevet US 2012/114494 A1, d'ajouter le renfort par fabrication additive, ce qui présente toutefois d'autres inconvénients.

### Objet et résumé de l'invention

La présente invention vise à remédier à ces inconvénients. En particulier, la présente divulgation vise à proposer un procédé qui permette une fabrication plus économique de boucliers de bord d'attaque.

Dans au moins un mode de réalisation, ce procédé de fabrication de bouclier de bord d'attaque comprend une déformation plastique initiale d'au moins une tôle parmi une tôle intrados et une tôle extrados, l'ajout d'un renfort sur une surface intérieure d'au moins une desdites tôles intrados et extrados, la fermeture desdites tôle intrados et extrados autour d'un noyau, après ladite déformation plastique initiale et l'ajout de chaque renfort, une déformation plastique subséquente, par compression contre une surface externe du noyau, desdites tôles intrados et extrados après leur fermeture autour du noyau, et l'extraction du noyau.

Grâce en particulier à l'étape d'ajout d'un renfort sur au moins une desdites tôles intrados et extrados, il devient possible de fabriquer un bouclier de bord d'attaque avec des ailettes fines et des rayons de courbure réduits entre ces ailettes et une section centrale plus épaisse les reliant, tout en évitant en grande partie l'usinage du matériau formant ce bouclier, et donc le coût de sa fabrication.

Ledit renfort est formé directement sur la tôle intrados et/ou extrados par une méthode de fabrication additive, telle que par exemple la fusion sélective par laser ou faisceau d'électrons ou le dépôt par plasma ou faisceau d'électrons. La fabrication additive du renfort directement sur la tôle permet d'éviter entièrement ou presque entièrement l'usinage de ce renfort, tout en assurant des tolérances de fabrication étroites et une liaison forte entre le renfort et la tôle. Comme l'ajout du renfort s'effectue avant la fermeture desdites tôle intrados et extrados autour d'un noyau, cet ajout est fait sur les surfaces intérieures de ces tôles, c'est-à-dire celles destinées à faire face au noyau. Ainsi, la rugosité de surface du renfort résultant de sa fabrication additive n'affectera pas la qualité des surfaces extérieures du bouclier.

L'ajout dudit renfort peut être effectué avant la déformation plastique initiale de la tôle intrados et/ou extrados, notamment quand cet ajout est effectué par fabrication additive, la tôle et le renfort formant ensuite un ensemble monobloc pouvant être déformé sans déplacement du renfort. Alternativement, toutefois, l'ajout dudit renfort peut être effectué après la déformation plastique initiale de la tôle intrados et/ou extrados. Le relief de la tôle après sa déformation plastique initiale permet ainsi de faciliter le positionnement précis du renfort préformé sur celle-ci.

La déformation plastique initiale de la tôle intrados et/ou extrados peut notamment être effectuée par matriçage. Ce procédé de déformation plastique à chaud permet d'obtenir des formes tridimensionnelles complexes même au départ de tôles particulièrement rigides, et des propriétés physiques particulièrement avantageuses de pièces, notamment une grande résistance à la fatigue, pour des pièces en alliage métallique.

La fermeture desdites tôles intrados et extrados autour d'un noyau peut notamment comprendre une étape de soudure périphérique desdites tôles intrados et extrados autour du noyau. Cette soudure périphérique permet d'une part au moins une solidarisation initiale des deux tôles, et d'autre part peut aussi assurer l'étanchéité d'une cavité entre les deux tôles qui comprend le noyau. Cette étanchéité peut en particulier être utile pour la déformation plastique subséquente des tôles.

Ladite déformation plastique subséquente peut en particulier être effectuée par compression isostatique chaude (connue aussi sous l'abréviation HIP, de l'anglais « Hot Isostatic Pressing »). Comme le matriçage, la compression isostatique chaude permet l'obtention de formes complexes même avec des matériaux hautement rigides, les deux tôles épousant étroitement les formes du noyau avec cette méthode. En même temps, la compression isostatique chaude permet de consolider les liaisons entre la tôle intrados, la tôle extrados et chaque renfort, ainsi que de diminuer la porosité et augmenter la densité de chacun de ces composants, et notamment du renfort quand il a été produit par fabrication additive. Avantageusement, la soudure périphérique évoquée précédemment offre pour avantage d'éliminer tout risque d'oxydation des surfaces internes en maintenant la cavité sous vide lors du traitement HIP.

Le procédé de fabrication peut aussi comprendre au moins une étape d'usinage des tôles intrados et extrados après ladite déformation plastique subséquente, afin d'assurer la finition du bouclier et/ou permettre l'extraction du noyau.

En outre, un insert en matériau composite à matrice céramique peut être placé dans une concavité dudit renfort avant la fermeture desdites tôles extrados et intrados autour du noyau. Cet insert permet d'augmenter la rigidité du bouclier face aux impacts frontaux et aux efforts centrifuges sur le bord d'attaque de l'aube.

Par ailleurs, la tôle intrados, la tôle extrados, et/ou le renfort sont au moins principalement en titane, matériau offrant des propriétés physiques particulièrement avantageuses pour cette application. Par « au moins principalement en titane », on comprend que le matériau de chacun de ces composants peut notamment être un alliage à base de titane.

La présente divulgation concerne également un bouclier de bord d'attaque fabriqué suivant ce procédé et dans lequel le renfort est disposé sur la surface intérieure d'au moins une desdites tôle intrados et extrados, une aube comprenant un corps en matériau composite et un tel bouclier de bord d'attaque, ainsi qu'un turboréacteur à double flux comprenant une soufflante, carénée ou non, avec une pluralité de telles aubes.

### Brève description des dessins

L'invention sera bien comprise et ses avantages apparaîtront mieux, à la lecture de la description détaillée qui suit, de deux modes de réalisation représentés à titre d'exemples non limitatifs. La description se réfère aux dessins annexés sur lesquels :
- la figure 1 est une vue schématique en perspective d'un turboréacteur à double flux ;
- la figure 2 est une vue schématique en perspective d'une aube tournante de la soufflante du turboréacteur de la figure 1 ;
- la figure 3 est une vue schématique en perspective d'un bouclier de bord d'attaque de l'aube de la figure 2 ;
- la figure 4 est une vue en coupe transversale, suivant le plan IV-IV, du bouclier de la figure 3 ;
- les figures 5A à 5H illustrent des étapes successives d'un procédé de fabrication du bouclier de la figure 4.

### Description détaillée de l'invention

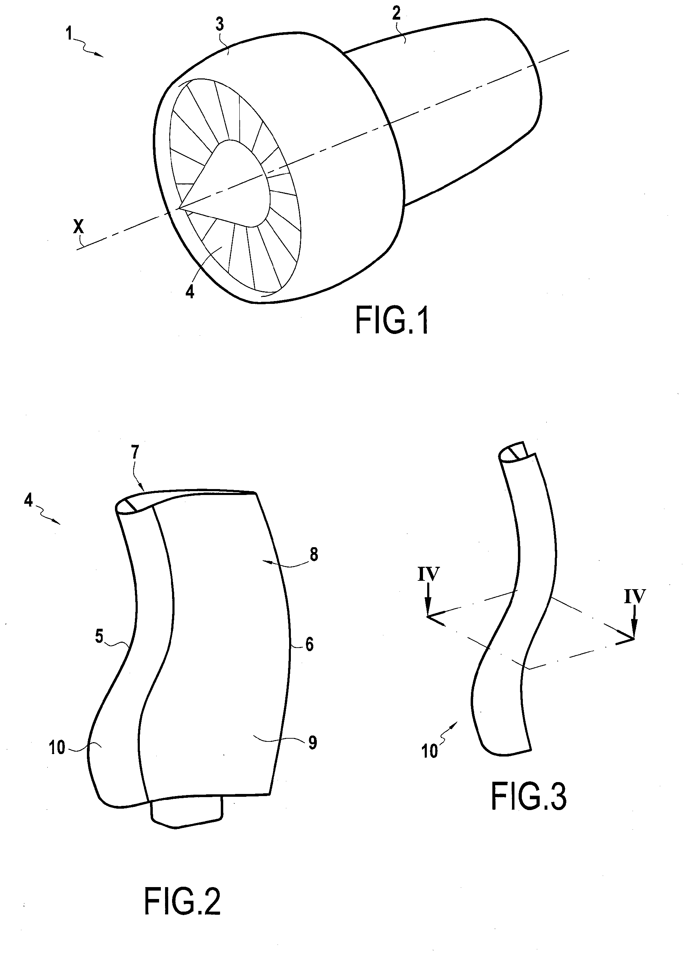

La figure 1 illustre un turboréacteur à double flux 1 comprenant un groupe générateur de gaz 2 et une soufflante 3. Cette soufflante 3 comprend une pluralité d'aubes tournantes 4, arrangées radialement autour d'un axe central X, et profilées aérodynamiquement de manière à impulser l'air par leur rotation. Ainsi, comme illustré sur la figure 2, chaque aube 4 présente un bord d'attaque 5, un bord de fuite 6, un extrados 7 et un intrados 8.

En fonctionnement normal, le vent relatif est sensiblement orienté vers le bord d'attaque 5 de chaque aube 4. Ainsi, ce bord d'attaque 5 est particulièrement exposé aux impacts. En particulier quand l'aube 4 comprend un corps 9 en matériau composite, notamment à matrice polymère renforcée par des fibres, il convient donc de protéger le bord d'attaque 5 avec un bouclier 10 intégrée à chaque aube.

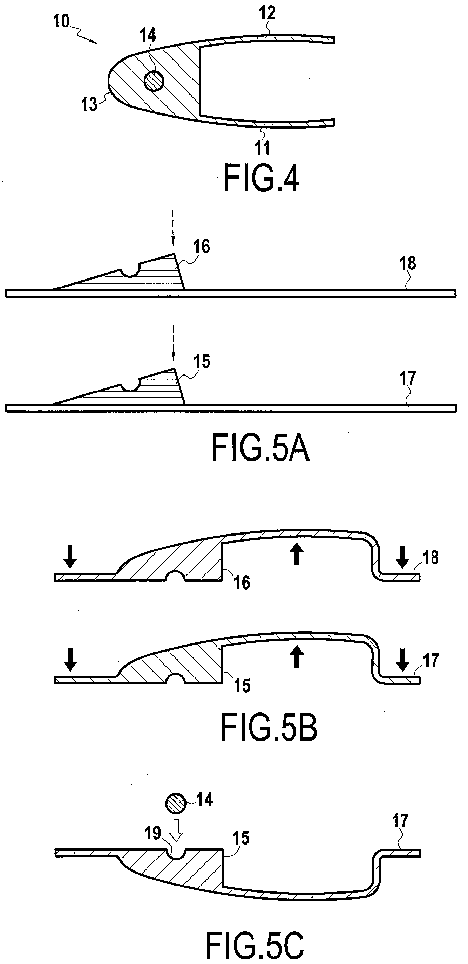

Les figures 3 et 4 illustrent ce bouclier 10 qui présente une ailette intrados 11, une ailette extrados 12 et une section centrale 13 plus épaisse, destinée à chevaucher le bord d'attaque de l'aube 4 et reliant l'ailette intrados 11 et l'ailette extrados 12. Les ailettes intrados et extrados 11, 12 assurent le positionnement du bouclier 10 sur l'aube 4. L'ensemble peut être principalement métallique, et plus spécifiquement en alliage à base de titane, comme par exemple le TA6V (Ti-6AI-4V). Toutefois, d'autres matériaux, principalement métalliques, comme l'aluminium et ses alliages ou les alliages à base nickel-chrome de type Inconel®, peuvent être utilisés alternativement ou en complément aux alliages à base de titane. En outre, la section centrale 13 puisse comprendre, comme dans l'exemple illustré, un insert longitudinal 14 en matériau composite à matrice céramique noyé dans sa masse. Cet insert 14 peut par exemple comprendre de fibres céramiques enrobées de titane ou d'alliage de titane orientées en direction longitudinale dans le sens de l'effort en rotation.

Comme l'on peut apprécier sur les figures 3 et 4, la forme de ce bouclier 10 peut être assez complexe, ce qui, combiné aux matériaux à hautes performances typiquement utilisés pour cette pièce, peut rendre sa fabrication coûteuse et difficile.

Un procédé de fabrication permettant de résoudre ce problème est illustré sur les figures 5A à 5H Dans une première étape de ce procédé, illustrée sur la figure 5A, on procède à ajouter, par fabrication additive, des renforts 15, 16 sur, respectivement, une tôle intrados 17 et une tôle extrados 18. Ces tôles 17,18 peuvent être métalliques et plus spécifiquement en alliage à base de titane, comme par exemple le TA6V. Parmi les méthodes de fabrication additive pouvant être utilisées pour cette première étape, on compte notamment la fusion sélective par laser ou faisceau d'électrons ou le dépôt par plasma ou faisceau d'électrons. Chacune de ces méthodes permet la fabrication additive d'un renfort 15,16 métallique attaché à la surface de la tôle 17,18. Le matériau du renfort peut également être choisi parmi les matériaux métalliques déjà cités, et en particulier être le même que celui de la tôle 17,18 à laquelle chaque renfort 15,16 est attaché.

Dans une deuxième étape, illustrée sur la figure 5B, on procède à une déformation plastique initiale des tôles 17,18. Cette déformation plastique initiale peut notamment être effectuée à chaud, par matriçage, après avoir chauffé chaque tôle à une température Tm qui peut être, par exemple, entre 400 et 600°C pour l'aluminium et les alliages à base d'aluminium, entre 800 et 1000°C pour le titane et les alliages à base de titane, et entre 850 et 1050°C pour les alliages à base nickel-chrome.

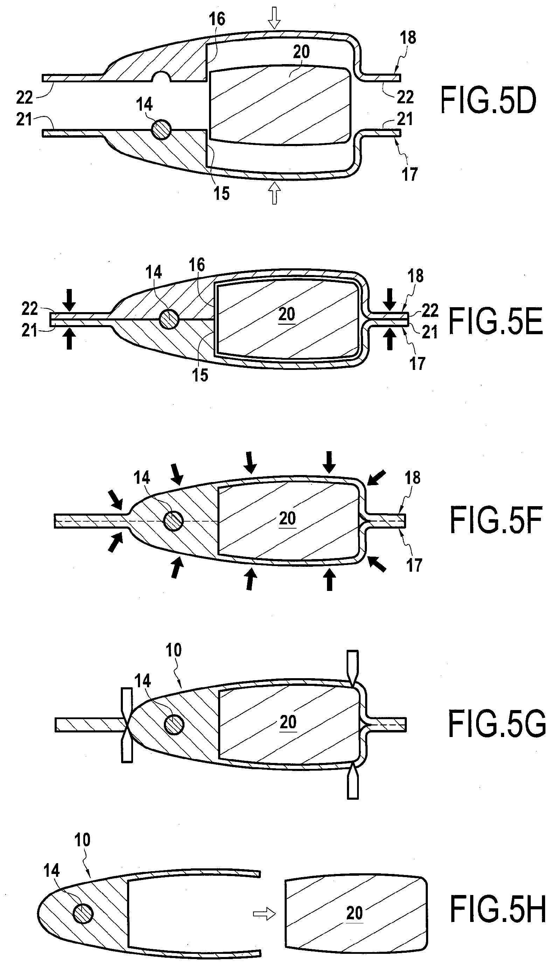

Dans une troisième étape, illustrée sur la figure 5C, l'insert longitudinal fibreux 14 est placé dans une concavité 19 formée dans l'un des renforts 15, 16. Ensuite, dans une quatrième étape, illustrée sur la figure 5D, les tôles 17, 18, avec les renforts 15, 16 et l'insert 14, sont fermées autour d'un noyau 20. Ainsi, des parois concaves des tôles 17, 18, formées lors de leur déformation plastique initiale, forment une cavité recevant le noyau 20, tandis qu'une périphérie 21 de la tôle intrados 17 contacte une périphérie 22 de la tôle extrados 18, tout autour du noyau 20 avec les renforts 15, 16 et l'insert 14. Le noyau 20 peut notamment être en un matériau sensiblement plus réfractaire que les tôles 17, 18 et les renforts 15, 16, et notamment en nickel ou alliage de nickel. Afin d'éviter l'adhérence des tôles 17, 18 et renforts 15, 16 au noyau 20, ce dernier peut avoir préalablement fait l'objet d'un traitement de surface, par exemple oxydation à une température To de, par exemple, 900°C pendant une période to d'au moins deux heures.

En variante non représentée, plusieurs concavités peuvent être prévues sur le plan de joint des renforts dans lesquelles seront placés le nombre correspondant d'inserts fibreux.

Dans une cinquième étape, illustrée sur la figure 5E, les périphéries 21, 22 des tôles 17, 18 sont soudées l'une à l'autre tout autour du noyau 20, refermant ainsi hermétiquement la cavité dans laquelle ce noyau 20 est reçu. Cette soudure peut en particulier être effectuée par faisceau d'électrons sous vide, quoique d'autres procédés de soudure puissent également être envisagés suivant les matériaux et les formes utilisés.

Dans une sixième étape, illustrée sur la figure 5F, on procède à la compression isostatique à chaud (HIP) des tôles 17,18 et renforts 15,16 contre la surface extérieure du noyau 20, réalisant ainsi notamment une déformation plastique subséquente des tôles 17, 18, mais aussi une consolidation de l'ensemble formé par les tôles 17,18 et les renforts 15,16. En outre, cette compression isostatique à chaud permet d'augmenter la densité des renforts 15, 16 et ainsi améliorer leurs propriétés mécaniques. La compression isostatique à chaud peut être effectuée à une pression ph de, par exemple, environ 100 mégapascal (MPa) et à une température Th pouvant être, par exemple, entre 850 et 950°C pour les alliages de titane.

Après cette sixième étape, on peut procéder à une septième étape, illustrée sur la figure 5G, dans laquelle les tôles 17, 18 sont usinées pour permettre l'extraction du noyau 20, ainsi que pour assurer la finition du bouclier 10 en éliminant notamment les périphéries 21, 22 des tôles 17, 18. On obtient ainsi, après l'extraction du noyau 20 illustrée sur la figure 5H, le bouclier 10 sous sa forme finale. Toutefois, même si l'usinage et l'extraction du noyau 20 sont ici illustrés comme des étapes consécutives, il est également envisageable d'effectuer une partie de cet usinage, en particulier pour la finition du bouclier 10, après l'extraction du noyau 20. Parmi les procédés d'usinage envisageables, on compte notamment le fraisage.

Quoique la présente invention ait été décrite en se référant à un exemple de réalisation spécifique, il est évident que des différentes modifications et changements peuvent être effectués sur ces exemples sans sortir de la portée générale de l'invention telle que définie par les revendications. En particulier, il est envisageable d'utiliser d'autres procédés de déformation plastique que le matriçage et la compression isostatique à chaud. Par ailleurs, et notamment si une méthode autre que la compression isostatique à chaud est utilisée pour la déformation plastique subséquente des tôles après leur fermeture autour du noyau, il serait envisageable de se passer de l'étape de soudure périphérique des tôles autour du noyau.

En outre, bien que dans le procédé illustré chaque tôle reçoive un renfort correspondant et soit soumise à une déformation plastique initiale, il serait également envisageable de n'utiliser qu'un seul renfort, ajouté à une seule des tôles et/ou de ne soumettre à qu'une seule des tôles à la déformation plastique initiale. Par exemple, les deux tôles pourraient être soumises à des déformations plastiques initiales, mais recevoir un seul renfort entre les deux. Ou, alternativement, l'un des côtés intrados ou extrados du bouclier pourrait être formé par déformation plastique initiale et ajout d'un renfort, tandis que l'autre serait formé par un procédé conventionnel, tel que l'usinage. Aussi, un renfort pourrait être ajouté à l'une des tôles par fabrication additive, tandis qu'un autre renfort préformé avant sa pose sur l'autre des tôles. Par conséquent, la description et les dessins doivent être considérés dans un sens illustratif plutôt que restrictif.

## Revendications

1. Procédé de fabrication d'un bouclier (10) de bord d'attaque, comprenant les étapes suivantes :
déformation plastique initiale d'au moins une tôle parmi une tôle intrados (17) et une tôle extrados (18) ;
ajout d'un renfort (15,16) crée directement sur une surface intérieure d'au moins une desdites tôles intrados et extrados (17,18) par fabrication additive ;
fermeture desdites tôle intrados et extrados (17,18) autour d'un noyau (20), après ladite déformation plastique initiale et l'ajout de chaque renfort (15,16) ;
déformation plastique subséquente, par compression contre une surface externe du noyau (20), desdites tôles intrados et extrados (17,18) après leur fermeture autour du noyau (20) ; et
extraction du noyau (20).

2. Procédé de fabrication suivant la revendication 1, dans lequel l'ajout dudit renfort (15,16) est effectué avant la déformation plastique initiale de la tôle intrados et/ou extrados (17,18).

3. Procédé de fabrication suivant l'une quelconque des revendications 1 à 2, dans lequel l'ajout dudit renfort (15,16) est effectué après la déformation plastique initiale de la tôle intrados et/ou extrados (17,18).

4. Procédé de fabrication suivant l'une quelconque des revendications précédentes, dans lequel la déformation plastique initiale de la tôle intrados et/ou extrados (17,18) est effectuée par matriçage.

5. Procédé de fabrication suivant l'une quelconque des revendications précédentes, dans lequel la fermeture desdites tôles intrados et extrados (17,18) autour d'un noyau comprend une étape de soudure périphérique desdites tôles intrados et extrados (17,18) autour du noyau (20).

6. Procédé de fabrication suivant la revendication 5, dans lequel ladite soudure périphérique est effectuée par faisceau d'électrons.

7. Procédé de fabrication suivant l'une quelconque des revendications précédentes, dans lequel ladite déformation plastique subséquente est effectuée par compression isostatique chaude.

8. Procédé de fabrication suivant l'une quelconque des revendications précédentes, comprenant au moins une étape d'usinage des tôles intrados et extrados (17,18) après ladite déformation plastique subséquente.

9. Procédé de fabrication suivant l'une quelconque des revendications précédentes, dans lequel un insert (14) en matériau composite à matrice céramique est placé dans une concavité (19) dudit renfort avant la fermeture desdites tôles extrados et intrados (17,18) autour du noyau (20).

10. Procédé de fabrication suivant l'une quelconque des revendications précédentes, dans lequel la tôle intrados (17), la tôle extrados (18), et/ou le renfort (15,16) sont au moins principalement en titane.

11. Bouclier (10) de bord d'attaque fabriqué avec le procédé de fabrication suivant l'une quelconque des revendications précédentes, dans lequel le renfort (15,16) est disposé sur la surface intérieure d'au moins une desdites tôles intrados et extrados (17,18).

12. Aube (4) comprenant un corps (9) en matériau composite et un bouclier (10) de bord d'attaque suivant la revendication 11.

13. Turboréacteur (1) à double flux comprenant une soufflante (3) avec une pluralité d'aubes (4) suivant la revendication 12.

## Patentansprüche

1. Verfahren zur Herstellung einer Vorderkantenabschirmung (10), das die folgenden Schritte umfasst:
anfängliches plastisches Verformen von mindestens einem Blech von einem Druckseitenblech (17) und einem Saugseitenblech (18);
Hinzufügen einer Verstärkung (15, 16), die durch additive Fertigung direkt auf einer inneren Oberfläche von mindestens einem von dem Druckseiten- und dem Saugseitenblech (17, 18) geschaffen wird;
Schließen des Druckseiten- und des Saugseitenblechs (17, 18) um einen Kern (20) herum, nach dem anfänglichen plastischen Verformen und dem Hinzufügen jeder Verstärkung (15, 16);
anschließendes plastisches Verformen durch Pressen des Druckseiten- und des Saugseitenblechs (17, 18) gegen eine äußere Oberfläche des Kerns (20), nachdem sie um den Kern (20) herum geschlossen wurden; und
Entnehmen des Kerns (20).

2. Herstellungsverfahren nach Anspruch 1, wobei das Hinzufügen der Verstärkung (15, 16) vor dem anfänglichen plastischen Verformen des Druckseiten- und/oder des Saugseitenblechs (17, 18) durchgeführt wird.

3. Herstellungsverfahren nach einem der Ansprüche 1 bis 2, wobei das Hinzufügen der Verstärkung (15, 16) nach dem anfänglichen plastischen Verformen des Druckseiten- und/oder des Saugseitenblechs (17, 18) durchgeführt wird.

4. Herstellungsverfahren nach einem der vorhergehenden Ansprüche, wobei das anfängliche plastische Verformen des Druckseiten- und/oder des Saugseitenblechs (17, 18) durch Gesenkformen durchgeführt wird.

5. Herstellungsverfahren nach einem der vorhergehenden Ansprüche, wobei das Schließen des Druckseiten- und des Saugseitenblechs (17, 18) um einen Kern herum einen Schritt zum umlaufenden Schweißen des Druckseiten- und des Saugseitenblechs (17, 18) um den Kern (20) herum umfasst.

6. Herstellungsverfahren nach Anspruch 5, wobei das umlaufende Schweißen durch Elektronenstrahl durchgeführt wird.

7. Herstellungsverfahren nach einem der vorhergehenden Ansprüche, wobei das anschließende plastische Verformen durch isostatisches Heißpressen durchgeführt wird.

8. Herstellungsverfahren nach einem der vorhergehenden Ansprüche, das ferner mindestens einen Schritt zum Bearbeiten des Druckseiten- und des Saugseitenblechs (17, 18) nach dem anschließenden plastischen Verformen umfasst.

9. Herstellungsverfahren nach einem der vorhergehenden Ansprüche, wobei ein Einsatz (14) aus Keramikmatrix-Verbundwerkstoff in einer Aushöhlung (19) der Verstärkung vor dem Schließen des Druckseiten- und des Saugseitenblechs (17, 18) um den Kern (20) herum platziert wird.

10. Herstellungsverfahren nach einem der vorhergehenden Ansprüche, wobei das Druckseitenblech (17), das Saugseitenblech (18) und/oder die Verstärkung (15, 16) zumindest hauptsächlich aus Titan bestehen.

11. Vorderkantenabschirmung (10), die mit dem Herstellungsverfahren nach einem der vorhergehenden Ansprüche hergestellt wird, wobei die Verstärkung (15, 16) auf der inneren Oberfläche von mindestens einem von dem Druckseiten- und dem Saugseitenblech (17, 18) angeordnet ist.

12. Schaufel (4), die einen Körper (9) aus Verbundmaterial und eine Vorderkantenabschirmung (10) nach Anspruch 11 umfasst.

13. Zweistrom-Turbinenstrahltriebwerk (1), das ein Gebläse (3) mit einer Vielzahl von Schaufeln (4) nach Anspruch 12 umfasst.

## Claims

1. A fabrication method for fabricating a leading edge shield (10), the method comprising the following steps:
performing initial plastic deformation at least one sheet from among a pressure side sheet (17) and a suction side sheet (18);
adding a reinforcement (15, 16) that is created directly on an inner surface of at least one of said pressure and suction side sheets (17, 18) by additive fabrication;
closing said pressure and suction side sheets (17, 18) around a core (20), after said initial plastic deformation and after adding the reinforcement (15, 16);
performing subsequent plastic deformation by pressing said pressure and suction side sheets (17, 18) against an outside surface of a core (20), after the sheets have been closed around the core (20); and
extracting the core (20).

2. A fabrication method according to claim 1, wherein said reinforcement (15, 16) is added before the initial plastic deformation of the pressure and/or suction side sheets (17, 18).

3. A fabrication method according to claim 1 or claim 2, wherein said reinforcement (15, 16) is added after the initial plastic deformation of the pressure and/or suction side sheets (17, 18).

4. A fabrication method according to any preceding claim, wherein the initial plastic deformation of the pressure and/or suction side sheets (17, 18) is performed by stamping.

5. A fabrication method according to any preceding claim, wherein closing said pressure and suction side sheets (17, 18) around a core comprises a step of welding together the peripheries of said pressure and suction side sheets (17, 18) around the core (20).

6. A fabrication method according to claim 7, wherein said peripheral welding is performed by electron beam welding.

7. A fabrication method according to any preceding claim, wherein said subsequent plastic deformation is performed by hot isostatic pressing.

8. A fabrication method according to any preceding claim, including at least one step of machining the pressure and suction side sheets (17, 18) after said subsequent plastic deformation.

9. A fabrication method according to any preceding claim, wherein an insert (14) of ceramic matrix composite material is placed in a recess (19) of said reinforcement prior to closing said suction and pressure side sheets (17, 18) around a core (20).

10. A fabrication method according to any preceding claim, wherein the pressure side sheet (17), the suction side sheet (18), and/or the reinforcement (15, 16) are made at least mainly out of titanium.

11. A leading edge shield (10) fabricated by the fabrication method according to any preceding claim, wherein the reinforcement (15,16) is placed on the inner surface of at least one of said pressure side and suction side sheets (17,18).

12. A blade (4) comprising a body (9) made out of composite material and a leading edge shield (10) according to claim 11.

13. A turbofan (1) including a fan (3) with a plurality of blades (4) according to claim 14.
